# EUROPÄISCHE PATENTSCHRIFT

(11) **EP 0 766 435 B1**
(45) Veröffentlichungstag und Bekanntmachung des Hinweises auf die Patenterteilung: **25.06.2003**
(21) Anmeldenummer: 96115052.1
(22) Anmeldetag: 19.09.1996
(51) Int. Cl.: H04M 1/57

(54) **Telekommunikationsendgerät mit dem Leistungsmerkmal "Anruferidentifikation"**
Telecommunication terminal with a caller identification function
Terminal de télécommunication avec la fonction d'identification de l'appelant

(30) Priorität: 29.09.1995 DE 19536524
(43) Veröffentlichungstag der Anmeldung: 02.04.1997
(73) Patentinhaber: SIEMENS AKTIENGESELLSCHAFT, 80333 München (DE)
(72) Erfinder: van Ledden, Hermann, Dipl.-Ing., 46395 Bocholt (DE); Nijmolen, Willem, 7102 DK Winterswijk (NL)

(56) Entgegenhaltungen:
- EP-A- 0 450 550
- EP-A- 0 535 562
- EP-A- 0 654 928
- DE-A- 4 128 686
- DE-A- 4 130 024
- US-A- 5 161 184

## Beschreibung

Die Erfindung geht von Telekommunikationsgeräten, insbesondere Telefonen, aus, die eine Vielzahl von Leistungsmerkmalen aufweisen und dementsprechend in bezug auf den Bedienkomfort komfortabel ausgestattet sind. Auf dem Gebiet der Fernsprechtechnik werden solche Telefone als Komfort-Telefone bezeichnet. Typische Leistungsmerkmale eines Komfort-Telefones sind zum Beispiel eine alphanumerische Anzeigeeinrichtung, ein Telefonregister mit der Speichermöglichkeit von mehreren Teilnehmernummern und den dazugehörigen Teilnehmernamen und eine alphanumerische Tastatur zur Informationseingabe. Das Eingeben von Teilnehmernummern und Teilnehmernamen mit der alphanumerischen Tastatur ist einerseits recht mühsam und erfordert andererseits in bezug auf die Ausgestaltung der Bedienoberflächen gegenüber normal ausgestatteten Telefonen einen wesentlich höheren Aufwand an Hard- und Software.

Bei der nächsten Generation von Komfort-Fernsprechern soll unter anderem das Leistungsmerkmal "Anrufer Identifikation (Caller ID)" integriert werden. Hierbei handelt es sich um ein Leistungsmerkmal, bei dem bei noch nicht betätigtem Gabelschalter (z. B. aufgelegter Handapparat) des Komfort-Telefons von der die Fernsprechverbindung zwischen einem A-Teilnehmer und einem B-Teilnehmer steuernden öffentlichen Vermittlungsstelle (Fernsprechamt) dem B-Teilnehmer Informationen über den A-Teilnehmer mitgeteilt werden. Die Informationen werden dabei durch eine Datenübertragung nach genormten Standards (z. B. Bell 202 oder CCITT V23) mitgeteilt.

Aus der DE 43 21 381 A1 und DE 44 08 976 A1 sind jeweils Telekommunikationsgeräte bekannt, die eine Schnittstelle zum Eingeben von Daten und eine Funktionsabläufe in dem Telekommunikationsendgerät steuernde zentrale Steuerung aufweisen.

Die Schnittstelle ist dabei einerseits mit der zentralen Steuerung und andererseits über einen Telekommunikationskanal mit einem Sendegerät derart verbunden, daß von dem Sendegerät gesendete endgerätespezifische Daten empfangen und an die zentrale Steuerung des Telekommunikationsendgerätes weitergegeben werden.

Die der Erfindung zugrundeliegende Aufgabe besteht darin, in Telekommunikationsendgeräten, insbesondere Komfort-Telefonen, mit dem Leistungsmerkmal "Anrufer Identifikation (Caller ID)" endgerätespezifische Daten, z. B. Daten zur Programmierung eines Registers mit Teilnehmernummern und/oder Teilnehmernamen, einzugeben.

Diese Aufgabe wird durch die in dem Patentanspruch 1 angegebenen Merkmale gelöst.

Die der Erfindung zugrundeliegende Idee besteht darin, das in zukünftigen Telekommunikationsendgeräten, insbesondere Komfort-Telefonen, realisierte Leistungsmerkmal "Anrufer Identifikation" zur endgerätespezifischen Dateneingabe zu nutzen. Unter endgerätespezifischer Dateneingabe soll dabei beispielsweise das Editieren eines Telefonregisters (Eingeben von Teilnehmernummern und/oder Teilnehmernamen), das Programmieren des Telekommunikationsendgerätes bzw. Telefons, das Verändern endgerätespezifischer Daten und das Aktivieren bzw. Deaktivieren endgerätespezifischer Grundfunktionen bzw. Testprozeduren im Rahmen der von einer Service-Leitstelle zur Beseitigung von endgerätespezifischen Fehlern durchgeführten Ferndiagnose und -Wartung (vgl. DE-4 408 976 A1) etc. verstanden werden. Um das Leistungsmerkmal "Anrufer Identifikation" entsprechend zu nutzen, wird vorzugsweise ein Personal Computer mit einem internen oder einem externen Modem mit dem Telekommunikationsendgerät bzw. dem Telefon verbunden. Alternativ sind aber auch andere telekommunikationsfähige - d. h. mit dem Telekommunikationsendgerät durch Telekommunikation verbindbare - Dateneingabemittel (Sendegeräte) - z. B. Personal Digital Assistants (PDA's) oder Personal Intelligent Communicators (PIC's) - möglich, die ebenfalls das Leistungsmerkmal "Anrufer Identifikation" unterstützen. Mit einer PC/Modem-Konfiguration können dadurch, daß alle handelsüblichen Modems die eingangs erwähnten genormten Standards bei Datenübertragung unterstützen, die vorstehend beschriebenen endgerätespezifischen Daten übertragen werden. Die Datenübertragung kann darüber hinaus drahtlos oder drahtgebunden erfolgen.

Vorteilhafte Weiterbildungen der Erfindung bzw. Anwendungen der Erfindung sind in den Unteransprüchen angegeben.

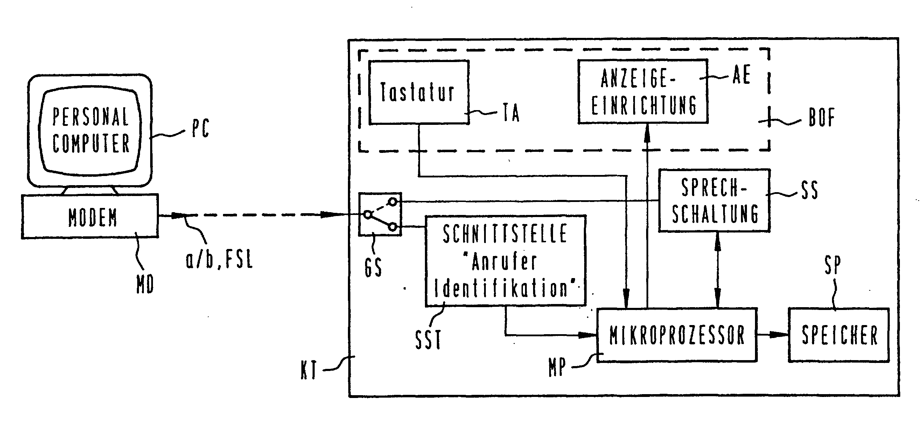

Ein Ausführungsbeispiel der Erfindung wird anhand der Figur erläutert.

Die Figur zeigt ein Komfort-Telefon KT mit einer zu einer Bedienoberfläche BOF gehörenden alphanumerischen Anzeigeeinrichtung AE und Tastatur TA, einer Sprechschaltung SS, einen Mikroprozessor MP zur Steuerung oder Funktionsablaufe in dem Komfort-Telefon KT, einen Speicher SP (z. B. ein als Telefonregister ausgebildetes E²PROM zur Speicherung von Teilnehmernummern und/oder Teilnehmernamen) und eine für das Leistungsmerkmal "Anrufer Identifikation" ausgelegte Schnittstelle SST, die in der gezeigten Weise miteinander verbunden sind. Darüber hinaus weist das Komfort-Telefon KT einen über einen Handapparat oder einer separaten Freisprechtaste bedienbaren Gabelschalter GS auf, über den das Komfort-Telefon KT an eine Telekommunikationsleitung a/b, FSL angeschlossen ist. Im aufgelegten Zustand des Handapparates ist die Schnittstelle SST an die Telekommunikationsleitung a/b, FSL angeschlossen. In diesem Zustand können über die Schnittstelle SST an den Mikroprozessor MP Daten, z. B. die eingangs erwähnten Daten über den A-Teilnehmer und/oder telefonspezifische Daten (Telefonregisterdaten) übertragen werden. Handelt es sich bei den übertragenen Daten um Telefonregisterdaten, so werden diese anschließend vom Mikroprozessor MP in den Speicher SP eingespeichert. Die telefonspezifischen Daten können jedoch nur dann über die Schnittstelle SST in das Komfort-Telefon KT eingegeben werden, wenn dieses auf die Datenübertragung vorbereitet ist. Für den Empfang der gesendeten Daten werden deshalb entsprechende Vorkehrungen getroffen. Diese sind:
1) Das Sendegerät aus Personal Computer PC und Modem MD überträgt codierte Daten an den Mikroprozessor MP, die die Übertragung der endgerätespezifischen Daten einleiten oder
2) der Zustand "Empfangen/Laden der telefonspezifischen Daten" in dem Komfort-Telefon KT ist über die Bedienoberfläche BOF, TA, AE und den Mikroprozessor MP menügesteuert eingestellt.

Für die'Übertragung der telefonspezifischen, z. B. für den Eintrag ins Telefonregister bestimmten Daten ist an dem gegenüberliegenden Ende der Telekommunikationsleitung a/b, FSL ein Modem MD angeschlossen. Für die Datenübertragung ist das Modem MD mit einem Personal Computer PC zu einem Sendegerät PC/MD verbunden. Die Verbindung "Personal Computer → Modem" kann beispielsweise als Zweikomponentenlösung (Personal Computer und Modem jeweils als Stand-Alone-Gerät) oder als Einkomponentenlösung (Personal Computer mit integrierter Modem-Karte) realisiert werden. Die dargestellte Konfiguration zur Ausnutzung des Leistungsmerkmals "Anrufer Identifikation" in Komfort-Telefonen KT ist nicht auf die Anwendung von Komfort-Telefonen beschränkt, sondern kann auf jedes beliebige Telekommunikationsendgerät ausgedehnt werden. Solche in Frage kommenden Telekommunikationsendgeräte sind z.B. Telefon-Anrufbeantworter, Schnurlostelefone, Mobilfunktelefone, Bildtelefone, Faximilegeräte etc. Als Alternative zu der PC/Modem-Version als Dateneingabemittel (Sendegerät) sind auch telekommunikationsfähige, das Leistungsmerkmal unterstützende Personal Digital Assistants (PDA's) oder Personal Intelligent Communicators (PIC's) denkbar.

## Patentansprüche

1. Telekommunikationsendgerät mit dem Leistungsmerkmal "Anrufer Identifikation" **gekennzeichnet durch** folgende Merkmale:
(a) eine endgerätespezifische, für diverse Datenübertragungsstandards, z. B. BELL 202 oder CCITT V23, und das Leistungsmerkmal "Anrufer Identifikation" ausgelegte Schnittstelle (SST) zum Eingeben von Daten,
(b) eine die Funktionsabläufe in dem Telekommunikationsendgerät (KT) steuernde Zentrale Steuerung (MP), die mit der Schnittstelle (SST) verbunden ist,
(c) die Schnittstelle (SST) ist über einen Telekommunikationskanal (a/b, FSL) mit einem Sendegerät (PC/MD) verbindbar und ist dazu geeignet, von dem Sendegerät (PC/MD) gesendete endgerätespezifische Daten zu empfangen und an die Zentrale Steuerung (MP) des Telekommunikationsendgerätes (KT) weiterzugeben.

2. Telekommunikationsendgerät nach Anspruch 1, **dadurch gekennzeichnet, daß** das Sendegerät (PC/MD) codierte Daten an die Zentrale Steuerung (MP) überträgt, die die Übertragung der endgerätespezifischen Daten einleiten.

3. Telekommunikationsendgerät nach Anspruch 1, **dadurch gekennzeichnet, daß** der Zustand "Empfangen/Laden von endgerätespezifischen Daten" über die Zentrale Steuerung (MP) menügesteuert einstellbar ist.

4. Telekommunikationsendgerät nach einem der Ansprüche 1 bis 3, **dadurch gekennzeichnet, daß** das Sendegerät (PC/MD) als Personal Computer (PC) mit einem zugeordneten Modem (MD) ausgebildet ist.

5. Telekommunikationsendgerät nach einem der Ansprüche 1 bis 3, **dadurch gekennzeichnet, daß** das Sendegerät (PC/MD) als "Personal Intelligent Communicator, PIC" ausgebildet ist.

6. Telekommunikationsendgerät nach einem der Ansprüche 1 bis 3, **dadurch gekennzeichnet, daß** das Sendegerät (PC/MD) als "Personal Digital Assistant (PDA)" ausgebildet ist.

7. Telekommunikationsendgerät nach einem der Ansprüche 1 bis 6, **dadurch gekennzeichnet, daß** der Telekommunikationskanal (a/b, FSL) als eine a/b-Leitung (a/b) oder eine Fernsprechleitung (FSL) ausgebildet ist.

8. Telekommunikationsendgerät nach einem der Ansprüche 1 bis 6, **dadurch gekennzeichnet, daß** der Telekommunikationskanal (a/b, FSL) als Funkkanal ausgebildet ist.

9. Telekommunikationsendgerät nach einem der Ansprüche 1 bis 8, **dadurch gekennzeichnet, daß** die endgerätespezifische Daten als Telefonregisterdaten ausgebildet sind.

10. Verwendung des Telekommunikationsendgerätes nach einem der Ansprüche 1 bis 9 als Komfort-Telefon.

11. Verwendung des Telekommunikationsendgerätes nach einem der Ansprüche 1 bis 9 als Schnurlostelefon oder Mobilfunktelefon.

## Claims

1. Telecommunications terminal having the "caller identification" service feature, and **characterized by** the following features:
(a) a terminal-specific interface (SST), which is designed for various data transmission standards, for example BELL 202 or CCITT V23, and for the "caller identification" service feature, for entering data,
(b) a central controller (MP) which controls the functional sequences in the telecommunications terminal (KT) and is connected to the interface (SST),
(c) the interface (SST) can be connected via a telecommunications channel (a/b, FSL) to a transmitter (PC/MD) and is suitable for receiving terminal-specific data transmitted by the transmitter (PC/MD) and for passing such data on to the central controller (MP) of the telecommunications terminal (KT).

2. Telecommunications terminal according to Claim 1, **characterized in that** the transmitter (PC/MD) transmits coded data to the central controller (MP), initiating the transmission of the terminal-specific data.

3. Telecommunications terminal according to Claim 1, **characterized in that** the "receive/load terminal-specific data" state can be set under menu control via the central controller (MP).

4. Telecommunications terminal according to one of Claims 1 to 3, **characterized in that** the transmitter (PC/MD) is in the form of a personal computer (PC) with an associated modem (MD).

5. Telecommunications terminal according to one of Claims 1 to 3, **characterized in that** the transmitter (PC/MD) is in the form of a Personal Intelligent Communicator, PIC.

6. Telecommunications terminal according to one of Claims 1 to 3, **characterized in that** the transmitter (PC/MD) is in the form of a Personal Digital Assistant (PDA).

7. Telecommunications terminal according to one of Claims 1 to 6, **characterized in that** the telecommunications channel (a/b, FSL) is in the form of an a/b line (a/b) or a telephone line (FSL).

8. Telecommunications terminal according to one of Claims 1 to 6, **characterized in that** the telecommunications channel (a/b, FSL) is in the form of a radio channel.

9. Telecommunications terminal according to one of Claims 1 to 8, **characterized in that** terminal-specific data is in the form of telephone directory data.

10. Use of the telecommunications terminal according to one of Claims 1 to 9 as an added-feature telephone.

11. Use of the telecommunications terminal according to one of Claims 1 to 9 as a cordless or mobile radio telephone.

## Revendications

1. Terminal de télécommunication avec la fonction « Identification de l'appelant » **caractérisé par** les caractéristiques suivantes :
(a) une interface (SST) spécifique au terminal, adaptée à divers standards de transmission de données, par exemple, BELL 202 ou CCITT V23, et la fonction « Identification de l'appelant » pour saisir des données,
(b) une commande centrale (MP) commandant les exécutions de fonction dans le terminal de télécommunication (KT), qui est reliée à l'interface (SST),
(c) l'interface (SST) peut être reliée par un canal de télécommunication (a/b, FSL) à un appareil émetteur (PC/MD) et est appropriée pour recevoir des données spécifiques à l'appareil émises par l'appareil émetteur (PC/MD) et les retransmettre à la commande centrale (MP) du terminal de télécommunication (KT).

2. Terminal de télécommunication selon la revendication 1, **caractérisé en ce que** l'appareil émetteur (PC/MD) transmet des données codées à la commande centrale (MP), lesquelles introduisent la transmission des données spécifiques au terminal.

3. Terminal de télécommunication selon la revendication 1, **caractérisé en ce que** l'état « réception / chargement de données spécifiques au terminal « peut être établi en étant commandé par menus par l'intermédiaire de la commande centrale (MP).

4. Terminal de télécommunication selon l'une des revendications 1 à 3, **caractérisé en ce que** l'appareil émetteur (PC/MD) est conçu comme un ordinateur personnel (PC) avec un modem (MD) associé.

5. Terminal de télécommunication selon l'une des revendications 1 à 3, **caractérisé en ce que** l'appareil émetteur (PC/MD) est conçu comme un « Personal Intelligent Communicator, PIC ».

6. Terminal de télécommunication selon l'une des revendications 1 à 3, **caractérisé en ce que** l'appareil émetteur (PC/MD) est conçu comme un « Personal Digital Assistant (PDA) ».

7. Terminal de télécommunication selon l'une des revendications 1 à 6, **caractérisé en ce que** le canal de télécommunication (a/b, FSL) est conçu comme une ligne a/b (a/b) ou une ligne de télécommunication (FSL).

8. Terminal de télécommunication selon l'une des revendications 1 à 6, **caractérisé en ce que** le canal de télécommunication (a/b, FSL) est conçu comme un canal radio.

9. Terminal de télécommunication selon l'une des revendications 1 à 8, **caractérisé en ce que** les données spécifiques au terminal sont conçues comme des données du répertoire téléphonique.

10. Utilisation du terminal de télécommunication selon l'une des revendications 1 à 9 comme téléphone de confort.

11. Utilisation du terminal de télécommunication selon l'une des revendications 1 à 9 comme téléphone sans fil ou téléphone de radiocommunication mobile.
